(19) Europäisches Patentamt
European Patent Office
Office européen des brevets

(11) EP 2 014 462 A1

(12) EUROPEAN PATENT APPLICATION
published in accordance with Art. 153(4) EPC

(43) Date of publication:
**14.01.2009 Bulletin 2009/03**

(21) Application number: **06756327.0**

(22) Date of filing: **25.04.2006**

(51) Int Cl.:
***B32B 27/08*** *(2006.01)*

(86) International application number:
**PCT/JP2006/308673**

(87) International publication number:
**WO 2007/129371 (15.11.2007 Gazette 2007/46)**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **The Nippon Synthetic Chemical Industry Co., Ltd.**
**Osaka-shi,**
**Osaka 531-0076 (JP)**

(72) Inventors:
- **NOMA, Shinji c/o the Nippon Synthetic Chemical**
  **Kita-ku, Osaka-shi, Osaka 531-0076 (JP)**
- **MAEJIMA, Keiji c/o the Nippon Synthetic Chemical**
  **Kita-ku, Osaka-shi, Osaka 531-0076 (JP)**
- **MORIYAMA, Takamasa c/o the Nippon Synthetic Chem**
  **Kita-ku, Osaka-shi, Osaka 531-0076 (JP)**
- **INOUE, Kaoru c/o the Nippon Synthetic Chemical**
  **Kita-ku, Osaka-shi, Osaka 531-0076 (JP)**

(74) Representative: **Kuhnen & Wacker**
**Patent- und Rechtsanwaltsbüro**
**Prinz-Ludwig-Strasse 40A**
**85354 Freising (DE)**

# (54) MULTILAYER FILM

(57) A multilayer film that even at high-speed film forming, excels in adhesion, appearance, transparency and pinhole prevention; and an oriented multilayer film excelling in gas barrier and pinhole prevention. There is provided a multilayer film **characterized by** having a layer containing an ethylene/vinyl alcohol copolymer containing the following structural unit (1) at its one major surface or both major surfaces laminated with a layer containing a thermoplastic resin.

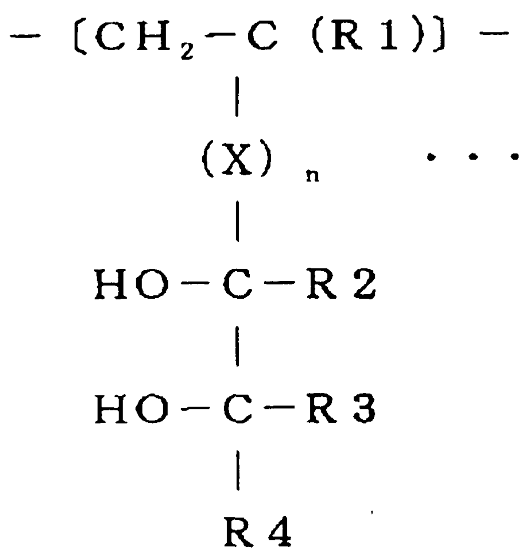

· · · (1)

EP 2 014 462 A1

wherein X is any bonding chain excluding ether bonds; each of R1 to R4 independently is an arbitrary substituent; and n is 0 or 1.

FIG. 1

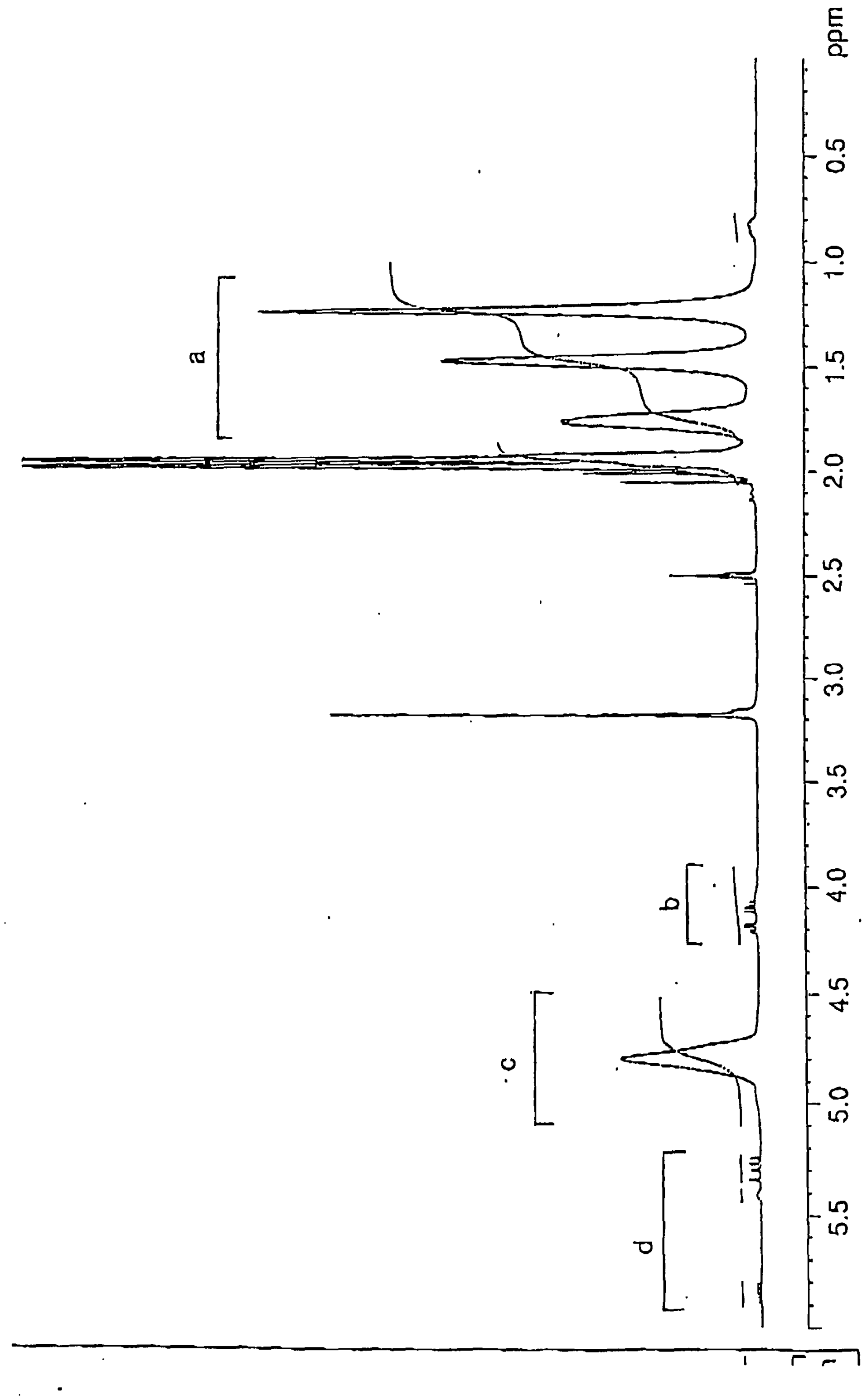

## Description

Technical Field

The present invention relates to a multi-layer film of an ethylene-vinyl alcohol copolymer (hereinafter, referred to as EVOH) and a thermoplastic resin. More specifically, it relates to a multi-layer film excellent in adhesiveness, appearance, flexing resistance, stretching property, and gas barrier property as well as a multi-layer stretched film obtained by stretching such a multi-layer film.

Background Art

EVOH is excellent in transparency, gas barrier property, aroma retention, solvent resistance, oil resistance and the like and has been formed into and utilized, making the most use of such properties, as containers such as a film, a sheet, a tube, a cup, a tray, a bottle for a food packaging material, a pharmaceutical packaging material, an industrial chemical packaging material, an agricultural chemical packaging material or the like.
Generally, for the purpose of compensation for mechanical properties and moisture resistance of EVOH, it has frequently used as a multi-layer film after lamination with other thermoplastic resin and particularly, has been used after lamination with a polyolefin-based thermoplastic resin having high moisture resistance. However, since a polyolefin-based resin is not adhesive to EVOH, the resin has been used after lamination through intervention of an adhesive resin layer such as an unsaturated carboxylic acid-modified polyolefin between the polyolefin-based resin layer and the EVOH layer but, depending on application uses, higher adhesiveness is required in some cases. As countermeasures, there has been proposed (1) a method of adding an alkali metal phosphate salt to EVOH (e.g., Patent Document 1), (2) a method of adding a metal salt, a phosphorus compound, or a boron compound to EVOH (e.g., Patent Document 2), and (3) a method of adding a saponified product of an ethylene-vinyl acetate copolymer resin and a tackifier as an adhesive resin layer to the resin (e.g., Patent Document 3).
Further, for the purpose of improving physical properties of the other thermoplastic resin and barrier properties of EVOH, such a multi-layer film is subjected to stretching treatment.
However, since ideal stretching conditions are different between EVOH and the other thermoplastic resin, particularly an olefin-based resin, it is difficult to subject them to stretching treatment in a laminated state simultaneously. Thus, as countermeasures, there have been proposed multi-layer stretched films obtained by (4) a method of blending a plasticizer with EVOH (see, e.g., Patent Documents 4 to 5), (5) a method of blending other resin with EVOH (see, e.g., Patent Documents 6 to 9), and (6) a method of blending two or more kinds of EVOH different in composition (see, e.g., Patent Documents 10 to 11).
Patent Document 1: JP-A-01-135852
Patent Document 2: JP-A-10-067898
Patent Document 3: JP-A-07-108655
Patent Document 4: JP-A-53-088067
Patent Document 5: JP-A-59-020345
Patent Document 6: JP-A-52-141785
Patent Document 7: JP-A-58-036412
Patent Document 8: JP-A-63-125334
Patent Document 9: JP-A-63-179935
Patent Document 10: JP-A-08-311276
Patent Document 11: JP-A-2000-336230

Disclosure of the Invention

Problems that the Invention is to Solve

However, when the present inventors have precisely investigated the above methods (1) to (3) regarding multi-layer films, a certain improvement in adhesive force is observed in all cases but recently, a process rate tends to be increased for the purpose of improving productivity. In that case, it becomes obvious that there are problems of decreased adhesive force, occurrence of layer instability, lowered appearance and transparency of the multi-layer films, decrease in flexing resistance, and the like, probably because of shortened contact time of EVOH with an adhesive resin in a melted state.
Further, with regard to multi-layer stretched films, gas barrier property is insufficient in those obtained by the

above method (4), gas barrier property is lowered or transparency of the films is lowered in some cases by stretching probably owing to low compatibility of EVOH with the other resin in those obtained by the method (5), gas barrier property is sometimes lowered in the case of stretching in a large rate. Moreover, it becomes obvious that pinholes are formed by repeated flexing and thus gas barrier property is lowered probably because flexibility of the EVOH layer is lowered by stretching.

Accordingly, it is desired to develop a multi-layer film satisfactory in adhesiveness and excellent in appearance, flexing resistance, stretching property, gas barrier property, and flexing resistance as well as a multi-layer stretched film obtained by stretching such a multi-layer film.

Means for Solving the Problems

As a result of the extensive studies in consideration of the above situations, it has been found that a multi-layer film which comprises a laminate of: a thermoplastic resin-containing layer; and a layer comprising an ethylene-vinyl alcohol copolymer comprising the following structural unit (1), wherein the thermoplastic resin-containing layer is provided on one side or both sides of the layer comprising an ethylene-vinyl alcohol copolymer, and a multi-layer film obtained by stretching such a multi-layer film meet the above object and thus have accomplished the invention.

[Chem 1]

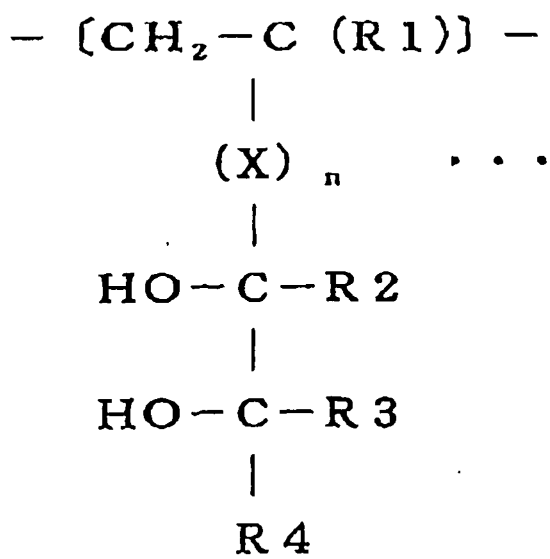

· · · (1)

wherein X represents a bonding chain which is an arbitrary bonding chain excluding an ether bond, R1 to R4 each independently represents an arbitrary substituent, and n represents 0 or 1.

In the invention, preferable embodiments are those that the thermoplastic resin is a polyolefin-based thermoplastic resin, it is laminated through intervention of an adhesive resin layer, the structural unit (1) is contained in an amount of 0.1 to 30% by mol, and the multi-layer film is a multi-layer film obtained by laminating a thermoplastic resin on EVOH comprising a boron compound in an amount of 0.001 to 1 part by weight, in terms of boron, based on 100 parts by weight of EVOH, and so forth.

Advantage of the Invention

Since the multi-layer film of the invention comprises an EVOH layer comprising a specific structural unit, it is excellent in adhesiveness, appearance, transparency, flexing resistance, stretching property, gas barrier property and flexing resistance even at high-speed process.

Brief Description of the Drawings

[FIG. 1]
FIG. 1 is a $^1$H-NMR chart of EVOH obtained in Polymerization Example 1 before saponification.
[FIG. 2]
FIG. 2 is a $^1$H-NMR chart of EVOH obtained in Polymerization Example 1.

Best Mode for Carrying Out the Invention

The following will specifically explain the invention.
The EVOH to be used in the multi-layer film of the invention is EVOH comprising the above structural unit (1), i.e., a structural unit having 1,2-glycol bond on a side chain. As the bonding chain (X) that bonds the molecular chain and the 1,2-glycol bond structure, any bonding chain excluding an ether bond can be applied. The bonding chain is not particularly limited but there may be mentioned hydrocarbons such as alkylene, alkenylene, alkynylene, phenylene and naphthalene (these hydrocarbons may be substituted with halogens such as fluorine, chlorine and bromine), and also -CO-, -COCO-, $-CO(CH_2)_mCO-$, $-CO(C_6R_4)CO-$, -S-, -CS-, -SO-, $-SO_2-$, -NR-, -CONR-, -NRCO-, -CSNR-, - NRCS-, -NRNR-, $-HPO_4-$, $-Si(OR)_2-$, $-OSi(OR)_2-$, $-OSi(OR)_2O-$, - $Ti(OR)_2-$, $-OTi(OR)_2-$, $-OTi(OR)_2O-$, -Al(OR)-, -OAl(OR)-, - OAl(OR)O-, or the like (R each independently represents an arbitrary substituent, preferably a hydrogen atom or an alkyl group, and m is a natural number). An ether bond is not preferable because it is decomposed at melt molding and the thermal melt stability of the resin composition decreases. Of these, from the viewpoint of the thermal melt stability, alkylene is preferable as the binding species and alkylene having 6 or less carbon atoms is further preferable. From the viewpoint that gas barrier performance of the EVOH becomes satisfactory, the number of carbon atoms is preferably smaller and a structure wherein a 1,2-glycol bond structure, where n is 0, is directly bonded to a molecular chain is most preferable. Moreover, R1 to R4 can be an arbitrary substituent and are not particularly limited. From the viewpoint of easy availability of monomers, a hydrogen atom and an alkyl group are preferable. Furthermore, a hydrogen atom is preferable from the viewpoint of good gas barrier property of the resin composition.
The process for producing the above EVOH is not particularly limited. However, for example, in the case of the most preferable structure in which the 1,2-glycol bond structure is bonded directly to a main chain, there may be mentioned a method of saponifying a copolymer obtained by copolymerizing 3,4-diol-1-butene, a vinyl ester-based monomer and ethylene; a method of saponifying a copolymer obtained by copolymerizing 3,4-diacyloxy-1-butene, a vinyl ester monomer and ethylene; a method of saponifying a copolymer obtained by copolymerizing 3-acyloxy-4-ol-1-butene, a vinyl ester-based monomer and ethylene; a method of saponifying a copolymer obtained by copolymerizing 4-acyloxy-3-ol-1-butene, a vinyl ester-based monomer and ethylene; a method of saponifying a copolymer obtained by copolymerizing 3,4-diacyloxy-2-methyl-1-butene, a vinyl ester-based monomer and ethylene; a method of saponifying a copolymer obtained by copolymerizing 2,2-dialkyl-4-vinyl-1,3-dioxolane, a vinyl ester-based monomer and ethylene; and a method of saponification and decarboxylation of a copolymer obtained by copolymerizing vinylethylene carbonate, a vinyl ester-based monomer and ethylene. As the process for preparing EVOH having alkylene as a bonding chain (X), there may be mentioned a method of saponifying a copolymer obtained by copolymerizing 4,5-diol-1-pentene, 4,5-diacyloxy-1-pentene, 4,5-diol-3-methyl-1-pentene, 4,5-diol-3-methyl-1-pentene, 5,6-diol-1-hexene, 5,6-diacyloxy-1-hexene or the like; a vinyl ester-based monomer; and ethylene. However, the method of saponifying a copolymer obtained by copolymerizing 3,4-diacyloxy-1-butene, a vinyl ester-based monomer and ethylene is preferable from the viewpoint that copolymerization reactivity is excellent, and as 3,4-diacyloxy-1-butene, use of 3,4-diacetoxy-1-butene is preferable. Also, a mixture of these monomers may be used. Furthermore, 3,4-diacetoxy-1-butane, 1,4-diacetoxy-1-butene, 1,4-diacetoxy-1-butane and the like may be contained as a small amount of impurities. Moreover, such copolymerization processes will be described below but are not limited thereto.
In this connection, 3,4-diol-1-butene is represented by the following formula (2), 3,4-diacyloxy-1-butene is represented by the following formula (3), 3-acyloxy-4-ol-1-butene is represented by the following formula (4) and 4-acyloxy-3-ol-1-butene is represented by the following formula (5).
[Chem 2]

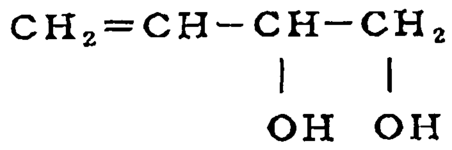

· · · (2)

[Chem 3]

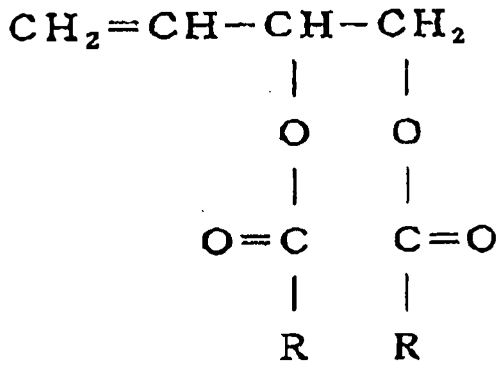

· · · (3)

(wherein R represents an alkyl group, preferably a methyl group)

[Chem 4]

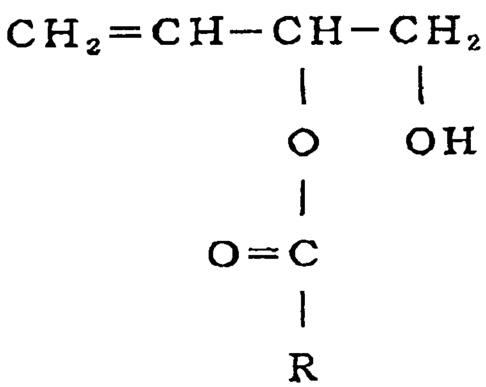

· · · (4)

(wherein R represents an alkyl group, preferably a methyl group)

[Chem 5]

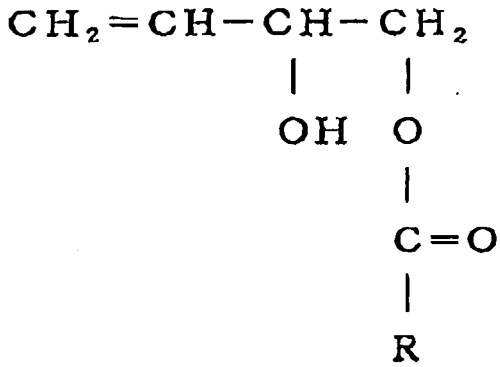

· · · (5)

(wherein R represents an alkyl group, preferably a methyl group)

The compound indicated by the above formula (2) is available from Eastman Chemical Company and the compound indicated by the above formula (3) is commercially available from Eastman Chemical Company and Across Inc.

As the vinyl ester-based monomer, there may be mentioned vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate and vinyl versatate. Of these, vinyl acetate is preferably used from an economical viewpoint.

The method for copolymerizing 3,4-diacyloxy-1-butene or the like, a vinyl ester-based monomer and ethylene is not particularly limited. Known methods such as bulk polymerization, solution polymerization, suspension polymerization, dispersion polymerization or emulsion polymerization can be employed, but usually solution polymerization is conducted.

The method for adding the monomer components at copolymerization is not particularly limited and any method such as adding all at once, adding divisionally, or adding continuously is adopted.

Moreover, as the method for introducing ethylene in the copolymer, it is sufficient to conduct usual ethylene-pressurized polymerization, and the introduction amount can be regulated by the pressure of ethylene. Depending on the objective ethylene content, the amount is not categorically determined but is usually selected from a range of 25 to 80 $kg/cm^2$.

As the solvent used for such copolymerization, there may be usually mentioned lower alcohols such as methanol, ethanol, propanol and butanol, and ketones such as acetone and methyl ethyl ketone. Methanol is suitably used from an industrial point of view.

The amount of the solvent to be used may be suitably selected in consideration of a chain transfer constant of the solvent, depending on the objective degree of polymerization of the copolymer. For example, when the solvent is methanol, it is selected from the range of S (solvent)/M (monomer) = 0.01 to 10 (weight ratio), preferably 0.05 to 7 (weight ratio).

A polymerization catalyst is used for copolymerization. As such a polymerization catalyst, there may be, for example, mentioned known radical polymerization catalysts such as azobisisobutyronitrile, acetyl peroxide, benzoyl peroxide and lauryl peroxide and catalysts active at low temperature such as peroxyesters including t-butylperoxyneodecanoate, t-butylperoxypivalate, α,α'-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate and t-hexyl peroxypivalate; peroxydicarbonates including di-n-propyl peroxydicarbonate, di-iso-propyl peroxydicarbonate, di-sec-butyl peroxydicarbonate, bis(4-t-butylcyclohexyl) peroxydicarbonate, di-2-ethoxyethyl peroxydicarbonate, di(2-ethylhexyl) peroxydicarbonate, dimethoxybutyl peroxydicarbonate and di(3-methyl-3-methoxybutylperoxy) dicarbonate; and diacyl peroxides including 3,3,5-trimethylhexanoyl peroxide diisobutyryl peroxide and lauroyl peroxide. The amount of the polymerization catalyst to be used depends on the type of catalyst and is not categorically determined but is arbitrarily selected according to a polymerization rate. For example, in the case that azobisisobutyronitrile or acetyl peroxide is used, the amount is preferably 10 to 2000 ppm, particularly 50 to 1000 ppm, based on the vinyl ester-based monomer.

Also, the reaction temperature of the copolymerization reaction is preferably selected from the range of 40°C to a boiling point depending on the solvent to be used and the pressure.

In the invention, a hydroxylactone-based compound or hydroxycarboxylic acid is preferably included together with the catalyst. The hydroxylactone-based compound is not particularly limited as long as it is a compound having a lactone ring and a hydroxyl group in the molecule. For example, there may be mentioned L-ascorbic acid, erythorbic acid, gluconodeltalactone and the like, and L-ascorbic acid and erythorbic acid are suitably used. Moreover, as the hydroxycarboxylic acid, there may be mentioned glycolic acid, lactic acid, glyceric acid, malic acid, tartaric acid, citric acid, salicylic acid and the like, and citric acid is suitably used.

The amount of the hydroxylactone-based compound or hydroxycarboxylic acid is preferably 0.0001 to 0.1 part by weight (more preferably 0.0005 to 0.05 part by weight, particularly 0.001 to 0.03 part by weight) based on 100 parts by weight of the vinyl acetate, in the case of both a batch type and a continuous type. When the amount is less than 0.0001 part by weight, the effects of the co-presence cannot be sufficiently obtained and to the contrary, when the amount is more than 0.1 part by weight, polymerization of the vinyl acetate is inhibited, thus the cases being not preferable. The method for adding the compound into the polymerization system is not particularly limited, but usually the compound is diluted with a solvent such as a lower aliphatic alcohol, an aliphatic ester including the vinyl acetate or water or a mixed solvent thereof and then added into the polymerization system.

In this connection, a copolymerization ratio of 3,4-diacyloxy-1-butene or the like is not particularly limited but the copolymerization ratio may be determined depending on the amount to be introduced of the above structural unit (1).

Also, in the invention, a copolymerizable ethylenically unsaturated monomer may be copolymerized at the above copolymerization within the range that the effects of the invention are not impaired. As such monomers, there may be mentioned olefins such as propylene, 1-butene and isobutene; unsaturated acids such as acrylic acid, methacrylic acid, crotonic acid, phthalic acid (anhydride), maleic acid (anhydride) and itaconic acid (anhydride) or salts thereof or mono- or di-alkyl esters having 1 to 18 carbon atoms; acrylamides such as acrylamide, N-alkylacrylamide having 1 to 18 carbon atoms, N,N-dimethylacrylamide, 2-acrylamidopropanesulfonic acid or salt thereof, acrylamidopropyldimethylamine or acid salts thereof or quaternary salts thereof; methacrylamides such as methacrylamide, N-alkylmethacrylamide having 1 to 18 carbon atoms, N,N-dimethylmethacrylamide, 2-methacrylamidopropanesulfonic acid or salts thereof, methacrylamidopropyldimethylamine, or acid salts thereof or quaternary salts thereof; N-vinylamides such as N-vinylpyrrolidone, N-vinylformamide and N-vinylacetoamide; vinyl cyanides such as acrylonitrile and methacrylonitrile; vinyl ethers such as alkyl vinyl ether having 1 to 18 carbon atoms, hydroxyalkyl vinyl ether and alkoxyalkyl vinyl ether; halogenated vinyls such as vinyl chloride, vinylidene chloride, vinyl fluoride, vinylidene fluoride and vinyl bromide; vinylsilanes; allyl acetate; allyl chloride; allyl alcohol; dimethylallyl alcohol; trimethyl-(3-acrylamide-3-dimethylpropyl)-ammonium chloride; acrylamido-2-methylpropanesulfonic acid; glycerin monoallyl ether; ethylene carbonate; and the like.

In addition, there may be also mentioned cation group-containing monomers such as N-acrylamidomethyltrimethylammonium chloride, N-acrylamidoethyl-trimethylammonium chloride, N-acrylamidopropyltrimethylammonium chloride, 2-acryloxyethyltrimethylammonium chloride, 2-methacryloxyethyltrimethylammonium chloride, 2-hydroxy-3-methacryloyloxypropyltrimethylammonium chloride, allyltrimethylammonium chloride, methallyltrimethylammonium chloride, 3-butene-trimethylammonium chloride, dimethyldiallylammonium chloride and diethyldiallylammonium chloride, and acetoacetyl group-containing monomers.

Furthermore, as the vinylsilanes, there may be mentioned vinyltrimethoxysilane, vinylmethyldimethoxysilane, vinyldimethylmethoxysilane, vinyltriethoxysilane, vinylmethyldiethoxysilane, vinyldimethylethoxysilane, vinylisobutyldimethoxysilane, vinylethyldimethoxysilane, vinylmethoxydibutoxysilane, vinyldimethoxybutoxysilane, vinyltributoxysilane, vinylmethoxydihexyloxysilane, vinyldimethoxyhexyloxysilane, vinyltrihexyloxysilane, vinylmethoxydioctyloxysilane, vinyldimethoxyoctyloxysilane, vinyltrioctyloxysilane, vinylmethoxydilauryloxysilane, vinyldimethoxylauryloxysilane, vinylmethoxydioleyloxysilane, vinyldimethoxyoleyloxysilane, and the like.

Then, the copolymer obtained is then saponified but the saponification is carried out in a state in which the copolymer obtained in the above is dissolved in an alcohol or hydrous alcohol, using an alkali catalyst or an acid catalyst. As the alcohol, there may be mentioned methanol, ethanol, propanol, tert-butanol and the like but methanol is preferably used in particular. The concentration of the copolymer in the alcohol is suitably selected according to a viscosity of the system, but is usually selected from the range of 10 to 60% by weight. As the catalyst to be used for the saponification, there may be mentioned alkali catalysts such as hydroxides and alcoholates of alkali metals including sodium hydroxide, potassium hydroxide, sodium methylate, sodium ethylate, potassium methylate and lithium methylate; and acid catalysts such as sulfuric acid, hydrochloric acid, nitric acid, metasulfonic acid, zeolite and a cation-exchange resin.

The amount of the saponifying catalyst is suitably selected according to the saponifying method, the aimed degree of saponification or the like, but when an alkali catalyst is used, the amount is suitably 0.001 to 0.1 equivalent and preferably 0.005 to 0.05 equivalent, based on a total amount of the vinyl ester-based monomer and 3,4-diacyloxy-1-butene.

Further, pressure at the saponification cannot be categorically said depending on the objective ethylene content, but is selected from the range of 2 to 7 $kg/cm^2$ and the temperature at that time is selected from 80 to 150°C and preferably from 100 to 130°C.

As described above, the EVOH to be used in the invention is obtained. In the invention, the ethylene content and the degree of saponification of the EVOH obtained are not particularly limited, but one having the ethylene content of 10 to 60% by mol (further, 20 to 50% by mol, particularly 25 to 48% by mol) and the degree of saponification or preferably 90% by mol or more (further, 95% by mol or more, particularly 99% by mol or more) is suitably used. When the ethylene content is less than 10% by mol, the gas barrier property and appearance at high humidity tend to be lowered and to the contrary, when it is more than 60% by mol, the gas barrier property tend to be lowered. Further, when the degree of saponification is less than 90% by mol, the gas barrier property, moisture resistance and the like tend to

be lowered. Thus, the cases are not preferable.

Moreover, the amount of the above structural unit

(1) to be introduced into the EVOH is not particularly limited, but 0.1 to 30% by mol (further 0.5 to 25% by mol, particularly 1 to 20% by mol) is preferable. When the amount to be introduced is less than 0.1% by mol, the effect of the invention is not adequately exhibited and to the contrary, when it is more than 30% by mol, the gas barrier property tends to be lowered, thus the cases being not preferable. Further, when the amount of the structural unit having 1,2-glycol bond is adjusted, it can be also adjusted by blending at least two kinds of EVOH wherein the amount to be introduced of the structural unit having 1,2-glycol bond differs. There is no problem even if at least one of them does not have the structural unit having 1,2-glycol bond.

With regard to the EVOH where the amount of 1,2-glycol bond is thus adjusted, the amount of 1,2-glycol bond may be calculated as a weight average and also the ethylene content may be calculated as a weight average but accurately, the ethylene content and the amount of 1,2-glycol bond can be calculated based on the results of $^{1}H$-NMR measurement to be mentioned below.

The EVOH having the structural unit (1) obtained by such a process may be used as it is. However, from the viewpoint of improving the thermal stability of the resin, it is preferable to add acids such as acetic acid or phosphoric acid or its salt of a metal such as an alkali metal, an alkaline earth metal or a transition metal, or boric acid or its metal salt as a boron compound, within the range that the purpose of the invention are not impaired.

The amount of acetic acid to be added is preferably 0.001 to 1 part by weight (further, 0.005 to 0.2 part by weight, particularly 0.010 to 0.1 part by weight) based on 100 parts by weight of the EVOH. When the amount to be added is less than 0.001 part by weight, the effect by comprising tends to be not obtained adequately and to the contrary, when it is more than 1 part by weight, the appearance of the resulting molded articles tends to be deteriorated, thus the cases being not preferable.

As the metal salt of boric acid, there may be mentioned calcium borate, cobalt borate, zinc borate (zinc tetraborate, zinc metaborate and the like), potassium aluminum borate, ammonium borate (ammonium metaborate, ammonium tetraborate, ammonium pentaborate, ammonium octaborate and the like), cadmium borate (cadmium orthoborate, cadmium tetraborate and the like), potassium borate (potassium metaborate, potassium tetraborate, potassium pentaborate, potassium hexaborate, potassium octaborate and the like), silver borate (silver metaborate, silver tetraborate and the like), copper borate (copper (II) borate, copper metaborate, copper tetraborate and the like), sodium borate (sodium metaborate, sodium diborate, sodium tetraborate, sodium pentaborate, sodium hexaborate, sodium octaborate and the like), lead borate (lead metaborate, lead hexaborate and the like), nickel borate (nickel orthoborate, nickel diborate, nickel tetraborate, nickel octaborate and the like), barium borate (barium orthoborate, barium metaborate, barium diborate, barium tetraborate and the like), bismuth borate, magnesium borate (magnesium orthoborate, magnesium diborate, magnesium metaborate, trimagnesium tetraborate, pentamagnesium tetraborate and the like), manganese borate (manganese (I) borate, manganese metaborate, manganese tetraborate and the like), lithium borate (lithium metaborate, lithium tetraborate, lithium pentaborate and the like), additionally, borate minerals such as borax, kernite, Inyoite, Kotoite, Suanite and Szaibelyite. Preferably, borax, boric acid and sodium borate (sodium metaborate, sodium diborate, sodium tetraborate, sodium pentaborate, sodium hexaborate, sodium octaborate and the like) are mentioned. Moreover, the amount of the boron compound to be added is preferably 0.001 to 1 part by weight (further, 0.002 to 0.2 part by weight, particularly 0.005 to 0.1 part by weight), in terms of boron, based on 100 parts by weight of the total of EVOH in the composition. When the amount to be added is less than 0.001 part by weight, the effect by comprising tends to be not obtained adequately and to the contrary, when it is more than 1 part by weight, the appearance of the resulting molded articles tends to be deteriorated, thus the cases being not preferable.

Further, as the metal salt, there may be mentioned metal salts such as sodium, potassium, calcium and magnesium salts of organic acids such as acetic acid, propionic acid, butyric acid, lauric acid, stearic acid, oleic acid and behenic acid and inorganic acids such as sulfuric acid, sulfurous acid, carbonic acid and phosphoric acid. A salt of acetic acid, a salt of phosphoric acid and a salt of hydrogen phosphoric acid are preferable. Moreover, the amount of the metal salt to be added is preferably 0.0005 to 0.1 part by weight (further, 0.001 to 0.05 part by weight, particularly 0.002 to 0.03 part by weight), in terms of metal, based on 100 parts by weight of EVOH. When the amount to be added is less than 0.0005 part by weight, the effect by comprising tends to be not obtained adequately and to the contrary, when it is more than 0.1 part by weight, the appearance of the resulting molded articles tends to be deteriorated, thus the cases being not preferable. Further, when two or more kinds of the salts of alkali metal and/or alkaline earth metal are added to EVOH, the total amount thereof preferably falls within the range of the above amount.

The method of adding acids or its metal salt to the EVOH is not particularly limited and includes (1) a method of bringing porous precipitates of the EVOH having a water content of 20 to 80% by weight into contact with an aqueous solution of the acids or its metal salt to incorporate the acid or its metal salt therein and then drying; (2) a method of incorporating the acids or its metal salt into a homogeneous solution (water/alcohol solution and the like) of the EVOH,

then extruding the mixture in a strand shape into a coagulation solution, then cutting the obtained strand to form pellets, and further subjecting them to a drying treatment; (3) a method of collectively mixing the EVOH with the acids or its metal salt and then melt-kneading the mixture by means of an extruder or the like; (4) a method of neutralizing alkali (sodium hydroxide, potassium hydroxide and the like) used in the saponifying step with acids such as acetic acid at the production of the EVOH and adjusting the amount of remaining acid such as acetic acid and an alkali metal salt such as sodium acetate or potassium acetate that is formed as a by-product, by a treatment of water rinsing; and the like. In order to more remarkably obtain the effect of the invention, the methods of (1), (2) and (4) that are superior in dispersibility of the acids or its metal salt are preferable.

After the addition of the salt or the metal salt, the EVOH composition obtained by the above method of (1), (2) or (4) is then dried.

As the drying method, various drying methods can be adopted. For example, there are mentioned fluidized drying by which the substantially pellet form EVOH is stirred and dispersed mechanically or with hot wind; and static drying by which the substantially pellet form EVOH is performed without providing dynamic action such as stirring and dispersion. A drier for carrying out the fluidized drying includes a columnar groove type stirring drier, a column tube drier, a rotary drier, a fluidized bed drier, a vibration fluidized bed drier, a cone rotary drier and the like. Further, a drier for carrying out the static drying includes a batch type box drier as material static type, a band drier, a tunnel drier and a vertical drier as a material transfer type, and the like, but is not limited thereto. The fluidized drying and the static drying can be carried out in combination.

Air or inert gas (nitrogen gas, helium gas, argon gas and the like) is used as heating gas used at the drying treatment. The temperature of the heating gas is preferably 40 to 150°C from the viewpoints of productivity and the prevention of thermal degradation of the EVOH. Usually, the time for the drying treatment is preferably about 15 minutes to 72 hours depending on the water content of the EVOH and the treating amount thereof from the viewpoints of productivity and the prevention of thermal degradation of the EVOH.

The EVOH composition is subjected to a drying treatment under the above conditions. The water content of the EVOH composition after the drying treatment is preferably 0.001 to 5% by weight (further 0.01 to 2% by weight, particularly 0.1 to 1 part by weight). When the water content is less than 0.001% by weight, long-run moldability tends to be lowered and to the contrary, when it is more than 5% by weight, there is a possibility that foam may be generated at extrusion molding.

Thus, the EVOH or its composition (hereinafter, collectively referred to as EVOH composition) to be used in the invention is obtained. The above EVOH composition may comprise a little amount of residual monomers (3,4-diol-1-butene, 3,4-diacyloxy-1-butene, 3-acyloxy-4-ol-1-butene, 4-acyloxy-3-ol-1-butene, 4,5-diol-1-pentene, 4,5-diacyloxy-1-pentene, 4,5-diol-3-methyl-1-pentene, 4,5-diol-3-methyl-1-pentene, 5,6-diol-1-hexene, 5,6-diacyloxy-1-hexene, 4,5-diacyloxy-2-methyl-1-butene and the like) and the saponified product of the monomers (3,4-diol-1-butene, 4,5-diol-1-pentene, 4,5-diol-3-methyl-1-pentene, 4,5-diol-3-methyl-1-pentene, 5,6-diol-1-hexene and the like), within the range that the purpose of the invention is not inhibited.

Further, it is also preferable that EVOH to be used in the invention is a blend of EVOH comprising the structural unit (1) and the other EVOH different from this EVOH from the viewpoint that the gas barrier property and pressure resistance are improved. As such other EVOH, EVOH different in structural unit, EVOH different in ethylene content, EVOH different in degree of saponification, EVOH different in molecular weight, and the like may be mentioned.

As the EVOH different in structural unit from the EVOH having the structural unit (1), there may be, for example, mentioned EVOH consisting of an ethylene structural unit and a vinyl alcohol structural unit and modified EVOH having a functional group such as 2-hydroxyethoxy group in a side chain may be mentioned.

Moreover, in the case that EVOH different in ethylene content is used, the structural unit may be the same or different but the difference of the ethylene content is preferably 1% by mol or more (further 2% by mol or more, particularly 2 to 20% by mol). When the difference of the ethylene content is too large, the transparency becomes bad in some cases, thus the case being not preferable.

A melt flow rate (MFR) (210°C, a load of 2160 g) of the EVOH composition thus obtained is not particularly limited, but is preferably 0.1 to 100 g/10 minutes (further 0.5 to 50 g/10 minutes, particularly 1 to 30 g/10 minutes). When the melt flow rate is less than the range, an inside of an extruder becomes a high torque state at molding and extrusion molding tends to be difficult. Further, when it is larger than the range, the appearance and the gas barrier property tend to be lowered. Thus, the cases are not preferable.

Moreover, the EVOH to be used in the invention and a composition thereof can be used as it is in melt molding or the like. However, in the invention, the EVOH may be mixed with a lubricant such as saturated aliphatic amide (for example, stearic acid amide or the like), unsaturated fatty acid amide (for example, oleic amide or the like), bis-fatty acid amide (for example, ethylene bis(stearic acid amide) or the like), a metal salt of fatty acid (for example, calcium stearate, magnesium stearate or the like) or low-molecular-weight polyolefin (for example, low molecular weight polyethylene with a molecular weight of about 500 to 10,000, low molecular weight polypropylene or the like); an inorganic salt (for example, hydrotalcite or the like); an oxygen absorbent (for example, as an inorganic-type oxygen absorbent, a reduced iron

powder, one in which a water-absorbing substance, an electrolyte and the like are added thereto, an aluminum powder, potassium sulfite, photo-catalyst titanium oxide or the like; as an organic compound-type oxygen absorbent, ascorbic acid, a fatty acid ester thereof, a metal salt thereof or the like, polyhydric phenol such as hydroquinone, gallic acid or a hydroxyl group-containing phenol aldehyde resin, a coordinate complex of a nitrogen-containing compound with a transition metal such as bis-salicylaldehyde-imine cobalt, tetraethylenepentamine cobalt, a cobalt-Schiff base complex, porphyrins, a macrocyclic polyamine complex and a polyethyleneimine-cobalt complex, a terpene compound, a reaction product of amino acids with a hydroxyl group-containing reductive substance and a triphenylmethyl compound; as a polymer-type oxygen absorbent, a coordinate complex of a nitrogen-containing resin with a transition metal (example: a combination of MXD Nylon with cobalt), a blend of a tertiary hydrogen-containing resin with a transition metal (example: a combination of polypropylene with cobalt), a blend of a carbon-carbon unsaturated bond-containing resin with a transition metal (example: a combination of polybutadiene with cobalt), a photooxidation degradative resin (example: polyketone), an anthraquinone polymer (example: polyvinylanthraquinone) or the like, and those in which a photoinitiator (benzophenone or the like), a peroxide-trapping agent (a commercially available antioxidant or the like) or a deodorant (active carbon or the like) are added to the blend; a thermal stabilizer; a photo stabilizer; an antioxidant; an ultraviolet absorbent; a coloring agent; an antistatic agent; a surfactant; an antibiotics; an anti-blocking agent; a slipping agent; a filler (for example, an inorganic filler or the like); other resin (for example, a polyolefin, polyamide or the like); or the like, within the range that the purpose of the invention is not inhibited.

Thus, the EVOH composition to be used for the multi-layer film of the invention is obtained and, at the preparation of the multi-layer film, is laminated on other thermoplastic resin. As the lamination method at the lamination with other thermoplastic resin, there may be, for example; a method of laminating other thermoplastic resin through intervention of an adhesive resin by melt-extrusion on the film, sheet or the like of the EVOH composition of the invention; to the contrary, a method of laminating the EVOH composition through intervention of an adhesive resin by melt-extrusion on a film, sheet or the like of other thermoplastic resin; a method of co-extruding the EVOH composition and other thermoplastic resin through intervention of an adhesive resin; and the like. However, the method of the co-extrusion is preferable because adhesiveness of the multi-layer film is satisfactory and productivity is high.

As the co-extrusion method, specifically, a known method such as a multi manifold die method, a feed block method, a multi slot die method or a die external adhesion method can be adopted. As the shape of dice, a T-dice and a round dice can be used and the melt molding temperature at the melt extrusion is preferably 150 to 300°C.

As such a thermoplastic resin, a polyolefin-based resin is useful. Specifically, homo- or copolymers of an olefin such as linear low density polyethylene, low density polyethylene, ultra low density polyethylene, middle density polyethylene, high density polyethylene, an ethylene-vinyl acetate copolymer, an ionomer, an ethylene-propylene (block and random) copolymer, an ethylene-acrylic acid copolymer, an ethylene-acrylate ester copolymer, polypropylene, a propylene-$\alpha$-olefin ($\alpha$-olefin having 4 to 20 carbon atoms) copolymer, polybutene and polypentene, or polyolefin-based resins such as polymers modified by grafting unsaturated carboxylic acid or its ester onto homo- or copolymers of these olefins are preferable. From the viewpoints of the practicability such as physical properties (in particular, strength) of the multi-layer film, polyethylene, polypropylene, and an ethylene-vinyl acetate copolymer are preferably used.

Further, when other substrate is coated by extrusion on the film of the EVOH composition or a film, sheet or the like of other substrate is laminated using an adhesive, arbitrary substrates (paper, metal foil, uniaxially or biaxially stretched plastic film or sheet and an inorganic substance-deposited article, fabric, non-woven fabric, metal cotton, wooden article and the like) other than the above-mentioned thermoplastic resin can be used as the substrate.

As the layer constitution of the multi-layer film, when the layer comprising the EVOH is referred to as a (al, a2, ...) and the thermoplastic resin-containing layer is referred to as b (b1, b2, ... ), not only the double layer structure of a/b but also arbitrary combinations such as b/a/b, a/b/a, a1/a2/b, a/b1/b2, b2/b1/a/b1/b2 and b2/b1/a/b1/a/b1/b2 are possible. Further, when a regrind layer comprising a mixture of at least the EVOH composition and the thermoplastic resin is referred to as R, b/R/a, b/R/a/b, b/R/a/R/b, b/a/R/a/b, b/R/a/R/a/R/b and the like are also possible and arbitrary combinations such as bimetal type for a, b, a core (a)-sheath (b) type, a core (b)-sheath (a) type or eccentric core sheath type are possible for filament shape. Further, in the above layer constitution, an adhesive resin layer may be provided at interlayers between the EVOH-containing layer and the thermoplastic resin-containing layer. As the adhesive resin, various resins can be used and it differs depending on the kind of the resin of b and cannot be categorically mentioned. However, a modified olefin-based polymer comprising a carboxyl group obtained by chemically bonding an unsaturated carboxylic acid or its anhydride with an olefin-based polymer (the above broad-sense polyolefin-based resin) by addition reaction or graft reaction can be mentioned. Specifically, there may be preferably mentioned one polymer or a mixture of two or more of polymers selected from maleic anhydride graft modified polyethylene, maleic anhydride graft modified polypropylene, a maleic anhydride graft modified ethylene-propylene (block or random) copolymer, a maleic anhydride graft modified ethylene-ethyl acrylate copolymer, a maleic anhydride graft modified ethylene-vinyl acetate copolymer and the like. The amount of the unsaturated carboxylic acid or its anhydride contained in the thermoplastic resin is preferably 0.001 to 3% by weight, more preferably 0.01 to 1% by weight and particularly preferably 0.03 to 0.5% by weight. When the modified amount in the modified product is little, adhesiveness is occasionally inadequate, and to the

contrary, when it is much, crosslinking reaction occurs and moldability is occasionally deteriorated, thus these cases being not preferable. The EVOH composition of the invention, other EVOH, rubber-elastomer components such as polyisobutylene and an ethylene-propylene rubber, the resin of the b layer and the like can be blended with these adhesive resins.

The thickness of the respective layers of the laminate is not categorically mentioned depending on the layer composition, the kind of b, uses, container shape, requested physical properties and the like, but the layer a is usually selected from the range of about 2 to 500 μm (further, 3 to 200 μm), the layer b is selected from the range of 10 to 5000 μm (further, 30 to 1000 μm), and the adhesive resin layer is selected from the range of about 1 to 400 μm (further, 2 to 150 μm).

Also, oxygen permeability of the thus obtained multi-layer film after flexing test is preferably 10 cc/$m^2$·day·atm or less, further preferably 5 cc/$m^2$·day·atm or less.

Further, the thermoplastic resin-containing layer may comprise an antioxidant, an antistatic agent, a lubricant, a nuclear material, an antiblocking agent, an ultraviolet absorbent, a wax or the like, which is hitherto known.

The thus obtained multi-layer film is stretched according to the uses and purposes and is used as a multi-layer stretched film. The (heat) stretching treatment means an operation by which a laminate in a film or sheet shape thermally uniformly heated is uniformly molded into a tube or a film shape by a chuck, a plug, vacuum force, pneumatic force, blow and the like. The stretching may be either of uniaxial stretching or biaxial stretching, and a multi-layer stretched film which has good physical properties, in which pin holes, cracks, lack of uniformity in stretching and the like at stretching are not generated and which is superior in gas barrier property and further anti-pinhole property is obtained by carrying out the stretching at a rate as high as possible (about 1.5 to 9 times in each of longitudinal and/or transverse directions).

As the stretching method, there can be also adopted a method having a high stretching rate among a roll stretching method, a tenter stretching method, a tubular stretching method, a stretch blow method, a vacuum pneumatic molding and the like. In case of the biaxial stretching, either of a simultaneous biaxial stretching mode and a successive biaxial stretching mode can be adopted. The stretching temperature is selected from the range of 40 to 170°C, preferably about 60 to 160°C. When the stretching temperature is lower than 40°C, the stretching property is insufficient and when the temperature is more than 170°C, it becomes difficult to maintain a stable stretching state.

Heat setting is conducted after the stretching. The heat setting may be performed by any known method, and the stretched film is heat-treated at 80 to 180°C, preferably at 100 to 165°C, for approximately 2 to 600 seconds with maintaining the film in a tense state.

The thickness of the respective layers of the multi-layer stretched film is not categorically mentioned depending on the layer constitution, the kind of b, uses, package forms, required physical properties and the like, but the layer a is usually selected from the range of 1 to 300 μm (further, 2 to 150 μm), the layer b is selected from the range of 5 to 3000 μm (further, 15 to 500 μm), and the adhesive resin layer is selected from the range of about 0.5 to 200 μm (further, 1 to 100 μm).

Also, an oxygen permeability of the obtained multi-layer film at 23°C and 80%RH is preferably 7 cc/$m^2$·day·atm or less, further preferably 6 cc/$m^2$·day·atm or less, particularly preferably 5 cc/$m^2$·day·atm or less.

The thus obtained multi-layer film has good gas barrier property, are excellent in adhesiveness, appearance, transparency, and flexing resistance (gas barrier property after flexing test). Further, the multi-layer stretched film obtained by stretching the multi-layer film has good gas barrier property and anti-pinhole property and is useful as various packaging materials for foods, pharmaceuticals, industrial chemicals, agricultural chemicals, and the like.

Examples

Hereinafter, the present invention is specifically described with reference to Examples. In the following, "%" is represented on a weight basis unless otherwise indicated.

Polymerization Example 1

An EVOH composition (A1) was obtained by the following method.

Into a 1 $m^3$ polymerization reactor having a cooling coil, 500 kg of vinyl acetate, 35 kg of methanol, 500 ppm (based on vinyl acetate) of acetyl peroxide, 20 ppm of citric acid and 14 kg of 3,4-diacetoxy-1-butene were added. After the system was replaced once with nitrogen gas, the system was replaced with ethylene and ethylene was introduced under pressure to achieve an ethylene pressure of 45 kg/$cm^2$. After stirring, temperature was raised to 67°C and polymerization was carried out for 6 hours until polymerization rate reached 50% while adding 3,4-diacetoxy-1-butene at a rate of 15 g/min in a total amount of 4.5 kg. Then, the polymerization reaction was stopped to obtain an ethylene-vinyl acetate copolymer having an ethylene content of 38% by mol.

A methanol solution of the ethylene-vinyl acetate copolymer was fed at a speed of 10 kg/hr from the tower top portion of a shelf stage tower (saponifying tower) and a methanol solution comprising 0.012 equivalent of sodium hydroxide based on the remaining acetic acid group in the copolymer was simultaneously fed from the tower top portion. On the other hand, methanol was fed at 15 kg/hr from the tower lower portion. Temperature in the tower was 100 to 110°C and the pressure of the tower was 3 kg/cm$^2$G. A methanol solution (30% of EVOH and 70% of methanol) of EVOH comprising a structural unit having 1,2-glycol bond was taken out from 30 minutes after the start of the adding. The degree of saponification of a vinyl acetate component of the EVOH was 99.5% by mol.

Then, the obtained methanol solution of the EVOH was fed at 10 kg/hr from the tower top portion of a methanol/aqueous solution preparation tower, methanol vapor at 120°C and water vapor were respectively added at 4 kg/hr and 2.5 kg/hr from the tower lower portion, methanol was distilled off at 8 kg/hr from the tower top portion, and 6 equivalents of methyl acetate based on the amount of sodium hydroxide used in the saponification was simultaneously added from the tower middle portion of the tower at an inner tower temperature of 95 to 110°C to obtain a water/alcohol solution of EVOH (a resin concentration of 35%) from the tower bottom portion.

The obtained water/alcohol solution of the EVOH was extruded in a strand shape from a nozzle having a hole diameter of 4 mm into a coagulation solution vessel kept at 5°C that comprises 5% of methanol and 95% of water and the strand shape article was cut with a cutter after completion of the coagulation to obtain porous pellets of EVOH having a diameter of 3.8 mm, a length of 4 mm and a water content of 45%.

After the porous pellets were rinsed with water so that 100 parts of water was used based on 100 parts of the porous pellets, they were added into a mix solution comprising 0.032% of boric acid and 0.007% of calcium dihydrogen phosphate and the mixture was stirred at 30°C for 5 hours. The porous pellets were further dried for 12 hours by passing nitrogen gas having a water content of 0.6% at a temperature of 70°C in a batch type aeration box drier, the water content being reduced to 30%. Then, they were dried for 12 hours with nitrogen gas having a water content of 0.5% at a temperature of 120°C using a batch type tower fluidized bed drier to obtain pellets of the objective EVOH composition. The pellets contained boric acid and calcium dihydrogen phosphate in an amount of 0.015 part by weight (in terms of boron) and 0.005 part by weight (in terms of phosphate radical) respectively based on 100 parts by weight of EVOH. The MFR (210°C, 2160 g) was 4.0 g/10 min.

Further, when the amount of 1,2-glycol bond introduced therein was calculated after the ethylene-vinyl acetate copolymer before saponification was measured on $^1$H-NMR (internal standard substance: tetramethylsilane, solvent: d6-DMSO), the amount was 2.5% by mol. On this occasion, "AVANCE DPX400" manufactured by Bruker Japan Co., Ltd. was used for NMR measurement.

[Chem 6]

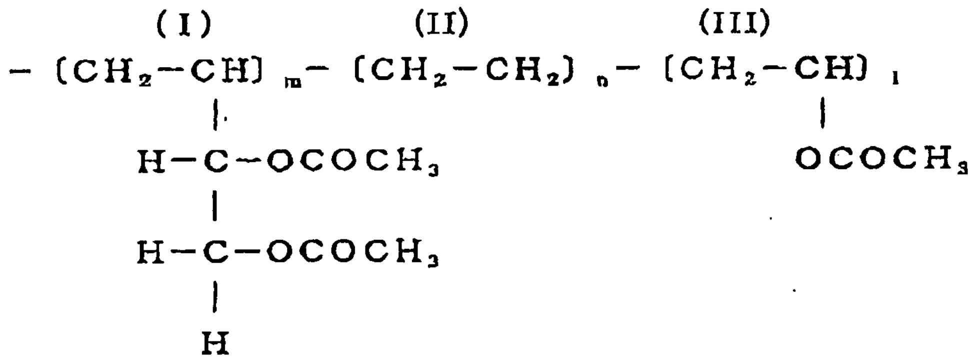

[$^1$H-NMR] (see FIG. 1)

1.0 to 1.8 ppm: Methylene proton (integration value a in FIG. 1)

1.87 to 2.06 ppm: Methyl proton

3.95 to 4.3 ppm: Proton at methylene side of structure (I) + proton of unreacted 3,4-diacetoxy-1-butene (integration value b in FIG. 1)

4.6 to 5.1 ppm: Methine proton + proton at methine side of structure (I) (integration value c in FIG. 1)

5.2 to 5.9 ppm; Proton of unreacted 3,4-diacetoxy-1-butene (integration value d in FIG. 1)

[Calculation Method]

Since 4 protons exist at 5.2 to 5.9 ppm, the integration value of one proton is d/4. Since the integration value b is an integration value in which the protons of the diol and the monomer are included, the integration value (A) of one proton of the diol is A=(b-d/2)/2. Since the integration value c is an integration value in which the protons of the vinyl acetate side and the diol side are included, the integration value (B) of one proton of vinyl acetate is B=1-(b-d/2)/2. Since the integration value a is an integration value in which ethylene and methylene are included, the integration value (C) of one proton of ethylene is calculated as C=(a-2×A-2×B)/4=(a-2)/4. The amount of the structural unit (1) introduced was calculated from 100×(A/(A+B+C))=100×(2×b-d)/(a+2).

Further, FIG. 2 shows the result in which $^1$H-NMR measurement was also carried out similarly with respect to EVOH after saponification. Since a peak corresponding to methyl proton at 1.87 to 2.06 ppm is greatly decreased, it is obvious that 3,4-diacetoxy-1-butene copolymerized is also saponified and converted to 1,2-glycol structure.

Polymerization Example 2

An EVOH composition (A2) was obtained by the following method.
Similar operations were conducted except that a mixture of 3,4-diacetoxy-1-butene, 3-acetoxy-4-ol-1-butene, and 1,4-diacetoxy-1-butene in a ratio of 70:20:10 was used in place of 3,4-diacetoxy-1-butene in Polymerization Example 1 to obtain an EVOH composition (A2) having an introduction amount of a structural unit having 1,2-glycol bond of 2.0% by mol and an ethylene content of 38% by mol, wherein the content of boric acid was 0.015 part by weight (in terms of boron), 0.005 part by weight (in terms of phosphate radical) of calcium dihydrogent phosphate was contained and MFR was 3.7 g/10 min.

Polymerization Example 3

An EVOH composition (A3) was obtained by the following method.
The amount of methanol added was changed to 20 kg in Polymerization Example 1 and treatment with a solution comprising no boric acid was conducted to obtain an EVOH composition (A3) wherein an ethylene content was 38% by mol, an amount of a structural unit having 1,2-glycol bond to be introduced was 2.5% by mol, the ethylene content of 38% by mol, no boric acid was contained, 0.005 part by weight (in terms of phosphate radical) of calcium dihydrogen phosphate was contained and MFR was 5.2 g/10 min.

Separately, there was prepared an EVOH composition (A4) comprising no structural unit (1), wherein an ethylene content was 38% by mol, a degree of saponification was 99.5% by mol, MFI was 3.5 g/min (210°, 2160 g), a content of boric acid was 0.015 part by weight (in terms of boron) and a content of calcium dihydrogen phosphate was 0.005 part by weight (in terms of phosphate radical).

[Multi-layer film]

Example 1

The EVOH composition (A1) obtained in the above was fed to a multi-layer extrusion apparatus fitted with a multi-layer T-die having 3 kinds and 5 layers of feed blocks to form a multi-layer film having a layer constitution of a low density polyethylene ("Novatech LD LF441MD" manufactured by Japan Polyethylene Corporation) layer/an adhesive resin ("Modick AP L504" manufactured by Mitsubishi Chemical Corporation) layer/an EVOH composition (A1) layer/an adhesive resin layer (same as in the left)/a polyethylene layer (same as in the left) (thickness 40/5/10/5/40 μm) under a condition of a process rate of 20 m/minute (low speed) or 50 m/minute (high speed).

With regard to the resulting multi-layer film, adhesiveness, appearance, transparency, and anti-pinhole property at high-speed process were evaluated as follows.

(Adhesiveness)

Adhesiveness was judged according to the following standard, while the adhesive force between the EVOH layer and the adhesive resin layer was represented by X (g/15 mm) at the time when it was formed at a process rate of 20 m/min and the adhesive force between the EVOH layer and the adhesive resin layer was represented by Y (g/15 mm) at the time when it was formed at a process rate of 50 m/min.

A ...

$$Y/X > 0.4$$

B ...

$$Y/X = 0.2 \text{ to } 0.4$$

C ...

$$Y/X < 0.2$$

(Appearance)

The multi-layer film obtained at a process rate of 50 m/min was judged according to the following standard by visual evaluation.

A ... Lines are hardly observed in film and image clarity is good.
B ... Deep lines are observed in film and image clarity is bad.

(Transparency)

The multi-layer film obtained at a process rate of 50 m/min was judged according to the following standard by measuring haze on a haze meter.

A ... Haze value is less than 3
B ... Haze value is 3 to 10.
C ... Haze value is more than 10.

(Oxygen permeability after flexing test)

With regard to the multi-layer film obtained at a process rate of 50 m/min, using a Gelbo Flex tester (manufactured by Rigaku Kogyo Company), a reciprocating motion of 440° twist (3.5 inches) + straight advance (2.5 inches) was repeated 500 times in an atmosphere of 23°C and 50%RH. Thereafter, oxygen permeability ($cc/m^2 \cdot day \cdot atm$) was measured under conditions of 23°C and 80%RH by means of an oxygen permeability-measuring apparatus "OXTRAN 2/21" manufactured by MOCON Company.

Example 2

A multi-layer film was produced in the same manner as in Example 1 except that the EVOH composition (A2) was used in place of the EVOH composition (A1). Evaluation was conducted similarly.

Example 3

A multi-layer film was produced in the same manner as in Example 1 except that the EVOH composition (A3) was used in place of the EVOH composition (A1). Evaluation was conducted similarly.

Comparative Example 1

A multi-layer film was produced in the same manner as in Example 1 except that the EVOH composition (A4) was used in place of the EVOH composition (A1). Evaluation was conducted similarly.
The evaluation results in Examples and Comparative Example are summarized in Table 1.

[Table 1]

| | Adhesiveness | Appearance | Transparency | Oxygen permeability after flexing test |
|---|---|---|---|---|
| Example 1 | A | A | A | 5.0 |
| Example 2 | A | A | A | 6.2 |
| Example 3 | A | A | A | 5.8 |
| Comparative Example 1 | C | B | B | 12.3 |
| Note) the unit of oxygen permeability is cc/m$^2$·day·atm | | | | |

[Multi-layer stretched film]

Example 4

The EVOH composition (A1) obtained in the above was fed to a multi-layer extrusion apparatus fitted with a multi-layer T-die having 3 kinds and 5 layers of feed blocks to obtain a multi-layer film having a layer constitution of a polypropylene ("Novatech PP FL6H" manufactured by Japan Polypropylene Corporation) layer/an adhesive resin ("Modick AP P604V" manufactured by Mitsubishi Chemical Corporation) layer/an EVOH composition (A1) layer/an adhesive resin layer (same as in the left)/a polypropylene layer (same as in the left) (thickness 160/50/80/50/160 μm). The film was pre-heated at 150°C for 1 minute and sequential biaxial stretching was conducted at the same temperature at a stretching rate of 100 mm/sec in the order of 4 times in a longitudinal direction and 6.5 times in a transverse direction (stretching rate: 26 times) and, after the stretching, thermal treatment was conducted at 155°C for 3 minutes to obtain a multi-layer stretched film of the invention. Stretching property at the preparation of the multi-layer stretched film and gas barrier property and anti-pinhole property of the resulting multi-layer film were evaluated as follows.

(Stretching property)

The resulting laminate was visually observed and appearance thereof was evaluated as follows.

A ... Uneven after stretching and lack of thickness uniformity are not observed and appearance is good.
B ... Uneven after stretching and lack of thickness uniformity are slightly observed but it is possible to use the laminate.
C ... Film is broken at stretching and it is impossible to obtain stretched film.

(Gas barrier property)

With regard to the multi-layer film after stretching, oxygen permeability was measured under conditions of 23°C and 80%RH by means of "OXTRAN 2/21" manufactured by MOCON Company.
Further, with regard to the multi-layer stretched film, flexing test was conducted by repeating a reciprocating motion of 440° twist (3.5 inches) + straight advance (2.5 inches) 500 times in an atmosphere of 23°C and 50%RH using a Gelbo Flex tester (manufactured by Rigaku Kogyo Company). Thereafter, oxygen permeability (cc/m$^2$·day·atm) of the multi-layer stretched film was measured under conditions of 23°C and 80%RH by means of an oxygen permeability-measuring apparatus ("OXTRAN 2/21" manufactured by MOCON Company) and was evaluated in comparison with the oxygen permeability before flexing.

Example 5

A multi-layer stretched film was produced in the same manner as in Example 4 except that the EVOH composition (A2) was used in place of the EVOH composition (A1). Evaluation was conducted similarly.

Example 6

A multi-layer stretched film was produced in the same manner as in Example 4 except that the EVOH composition (A3) was used in place of the EVOH composition (A1). Evaluation was conducted similarly.

Comparative Example 2

A multi-layer stretched film was produced in the same manner as in Example 1 except that the EVOH composition (B1) was used in place of the EVOH composition (A1). Evaluation was conducted similarly.

Comparative Example 3

A multi-layer stretched film was produced in the same manner as in Example 1 except that the EVOH composition (B2) was used in place of the EVOH composition (A1). Evaluation was conducted similarly.

Comparative Example 4

A multi-layer stretched film was produced in the same manner as in Example 1 except that the EVOH composition (B3) was used in place of the EVOH composition (A1). Evaluation was conducted similarly.
The evaluation results in Examples and Comparative Examples are summarized in Table 2.
[Table 2]

| | | Gas barrier property | |
|---|---|---|---|
| | Stretching property | Untreated article | After flexing test |
| Example 4 | A | 5.1 | 1.0 time (5.1) |
| Example 5 | A | 4.8 | 1.1 time (5.3) |
| Example 6 | A | 4.6 | 1.0 time (4.6) |
| Comparative Example 2 | C | - | - |
| Comparative Example 3 | C | - | - |
| Comparative Example 4 | A | 7.5 | 2.5 times (18.8) |
| Note) the unit of gas barrier property is $cc/m^2 \cdot day \cdot atm$<br>- means impossible measurement since no stretched film is obtained | | | |

While the invention has been described in detail and with reference to specific examples thereof, it will be apparent to one skilled in the art that various changes and modifications can be made therein without departing from the spirit and scope thereof.
The present application is based on Japanese Patent Application No. 2004-282133 and No. 2004-282139 filed on September 28, 2004 and Japanese Patent Application No. 2005-281241 and No. 2005-281914 filed on September 28, 2005, and the contents are incorporated herein by reference.

Industrial Applicability

The multi-layer film and multi-layer stretched film of the invention comprise a layer of EVOH comprising a structural unit (1) having 1,2-glycol bond at a side chain, are excellent in adhesiveness, appearance, transparency, and anti-pinhole property even at high-speed process, and are useful as packaging materials for foods, medical articles, industrial chemicals, pharmaceuticals, agricultural chemicals, electronic parts, mechanical parts, and the like.

## Claims

1. A multi-layer film which comprises a laminate of: a thermoplastic resin-containing layer; and a layer comprising an ethylene-vinyl alcohol copolymer comprising the following structural unit (1),
wherein the thermoplastic resin-containing layer is provided on one side or both sides of the layer comprising an ethylene-vinyl alcohol copolymer,

[Chem 1]

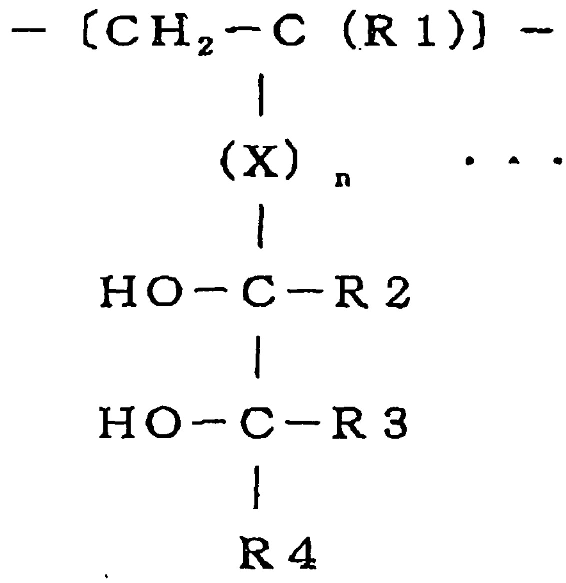

· · · (1)

wherein X represents a bonding chain which is an arbitrary bonding chain excluding an ether bond, R1 to R4 each independently represents an arbitrary substituent, and n represents 0 or 1.

**2.** The multi-layer film according to claim 1, wherein a thermoplastic resin in the thermoplastic resin-containing layer is a polyolefin-based resin and the layer comprising the ethylene-vinyl alcohol copolymer is laminated through intervention of an adhesive resin layer.

**3.** The multi-layer film according to claim 1 or 2, wherein the thermoplastic resin in the thermoplastic resin-containing layer is one selected from the group consisting of polyethylene, polypropylene, an ethylene-vinyl acetate copolymer resin.

**4.** The multi-layer film according to any one of claims 1 to 3, wherein each of R1 to R4 in the structural unit (1) is independently any one of a hydrogen atom, a hydrocarbon group having 1 to 8 carbon atoms, a cyclic hydrocarbon group having 3 to 8 carbon atoms, and an aromatic hydrocarbon group.

**5.** The multi-layer film according to any one of claims 1 to 4, wherein all of R1 to R4 in the structural unit (1) are a hydrogen atom.

**6.** The multi-layer film according to any one of claims 1 to 5, wherein X in the structural unit (1) is an alkylene group having 6 or less carbon atoms.

**7.** The multi-layer film according to any one of claims 1 to 5, wherein n in the structural unit (1) is 0.

**8.** The multi-layer film according to any one of claims 1 to 7, wherein the structural unit (1) is introduced into a molecular chain of the ethylene-vinyl alcohol copolymer by copolymerization.

**9.** The multi-layer film according to any one of claims 1 to 8, wherein an ethylene content of the ethylene-vinyl alcohol copolymer is 10 to 60% by mol.

**10.** The multi-layer film according to any one of claims 1 to 9, wherein the structural unit (1) is contained in an amount of 0.1 to 30% by mol in a molecular chain of the ethylene-vinyl alcohol copolymer.

**11.** The multi-layer film according to any one of claims 1 to 10, wherein the ethylene-vinyl alcohol copolymer is obtained by saponifying a copolymer of 3,4-diacyloxy-1-butene, a vinyl ester-based monomer, and ethylene.

**12.** The multi-layer film according to any one of claims 1 to 11, wherein the ethylene-vinyl alcohol copolymer is obtained by saponifying a copolymer of 3,4-diacetoxy-1-butene, a vinyl ester-based monomer, and ethylene.

**13.** The multi-layer film according to any one of claims 1 to 12, wherein the ethylene-vinyl alcohol copolymer comprises a boron compound in an amount of 0.001 to 1 part by weight, in terms of boron, based on 100 parts by weight of the ethylene-vinyl alcohol copolymer.

**14.** The multi-layer film according to any one of claims 1 to 13, wherein a thickness of the layer comprising the ethylene-vinyl alcohol copolymer comprising the structural unit (1) is 2 to 500 $\mu$m.

**15.** The multi-layer film according to any one of claims 1 to 14, wherein an oxygen permeability at 23°C and 80%RH after flexing test is 10 cc/$m^2$·day·atm or less.

**16.** A multi-layer film, which is a multi-layer stretched film obtained by stretching the multi-layer film according to any one of claims 1 to 15.

**17.** The multi-layer film according to claim 16, wherein an oxygen permeability at 23°C and 80%RH is 7 cc/$m^2$·day·atm or less.

FIG. 1

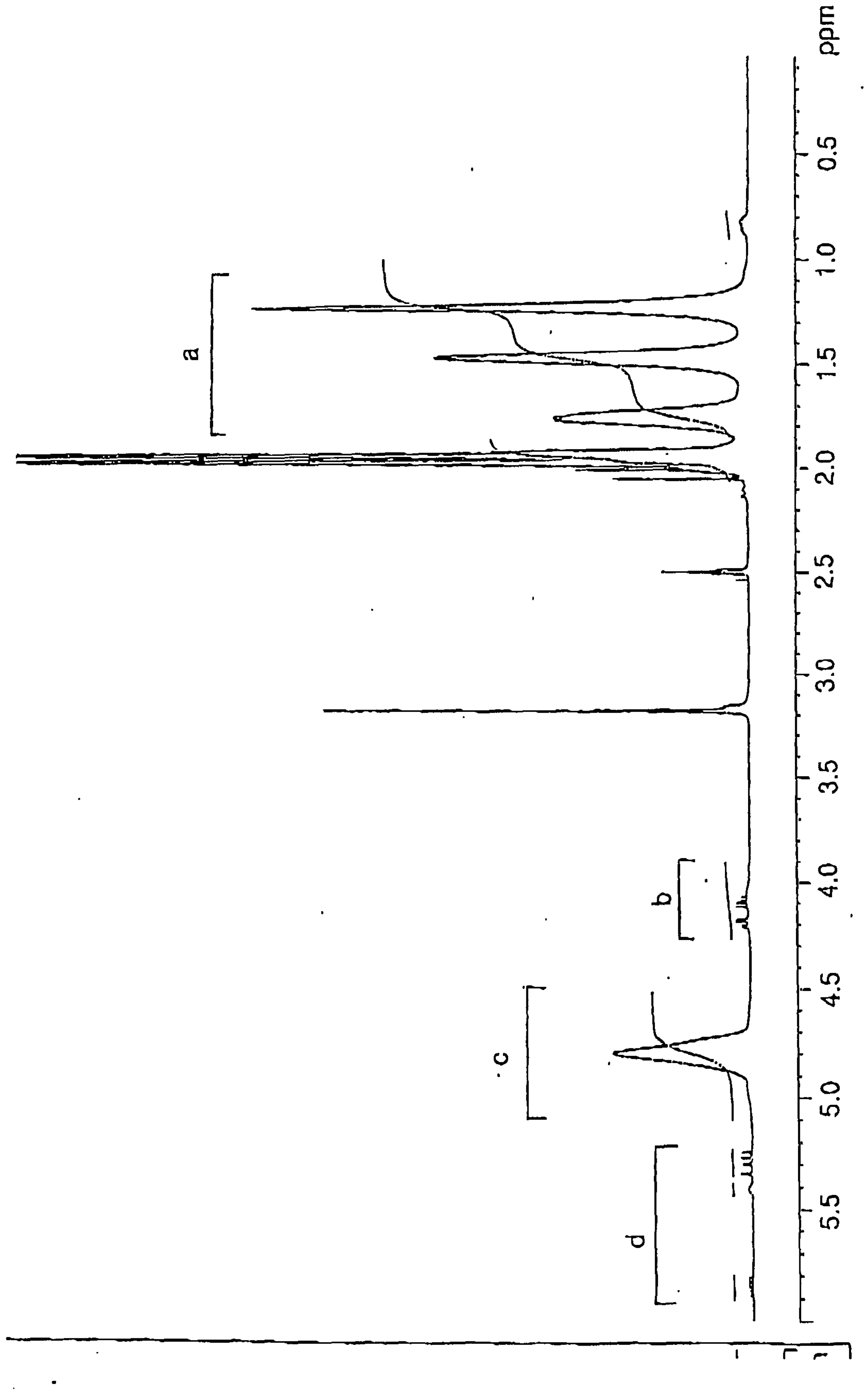

FIG. 2

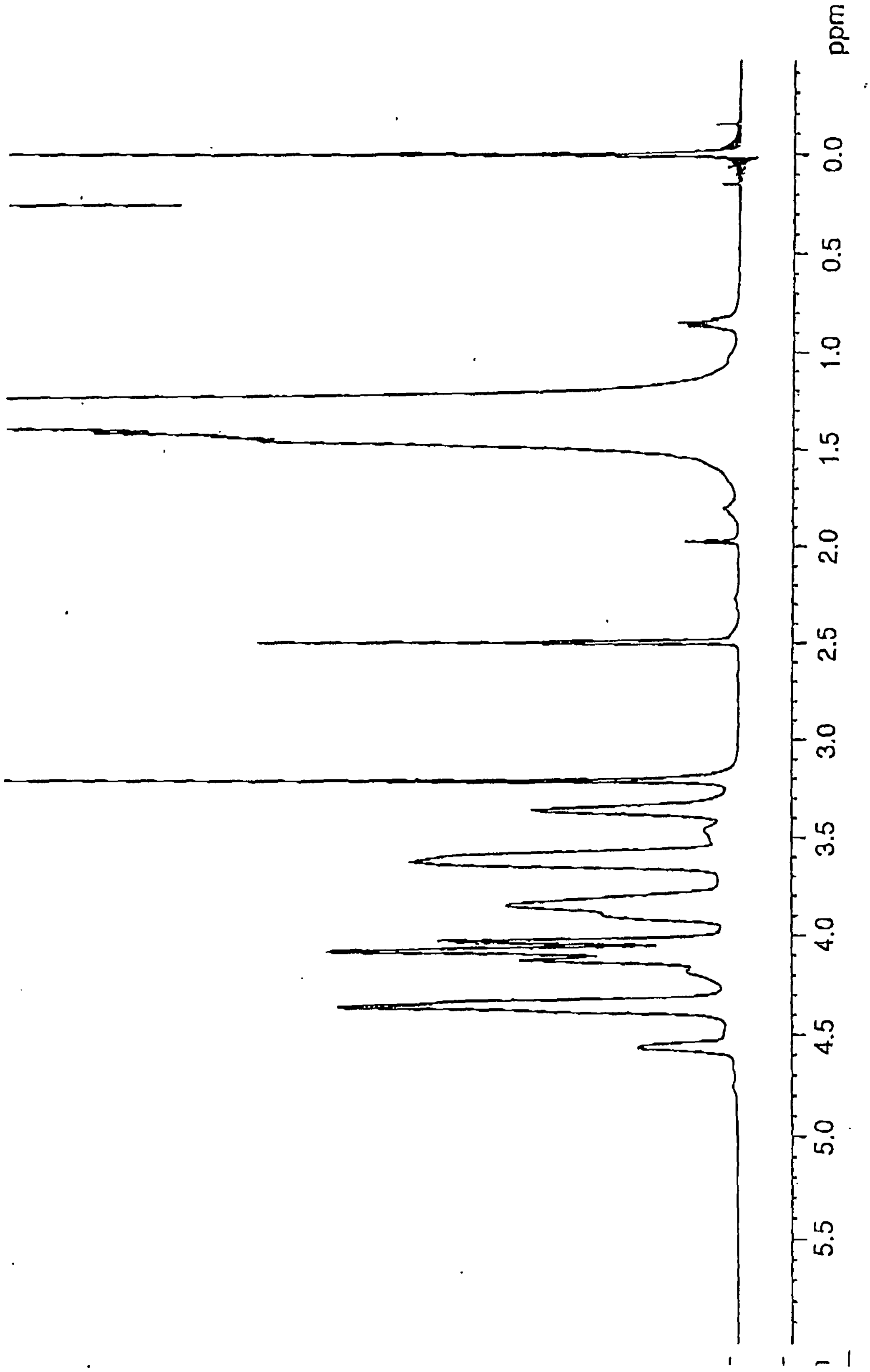

## INTERNATIONAL SEARCH REPORT

International application No.
PCT/JP2006/308673

A. CLASSIFICATION OF SUBJECT MATTER
*B32B27/28*(2006.01)i

According to International Patent Classification (IPC) or to both national classification and IPC

B. FIELDS SEARCHED

Minimum documentation searched (classification system followed by classification symbols)
B32B27/28, C08F216/06, C08L29/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
WPIL

C. DOCUMENTS CONSIDERED TO BE RELEVANT

| Category* | Citation of document, with indication, where appropriate, of the relevant passages | Relevant to claim No. |
|---|---|---|
| X | JP 2004-359965 A (The Nippon Synthetic Chemical Industry Co., Ltd.), 24 December, 2004 (24.12.04), Claims; Par. Nos. [0022] to [0023], [0033] to [0037] (Family: none) | 1-17 |
| X | JP 2006-96816 A (The Nippon Synthetic Chemical Industry Co., Ltd.), 13 April, 2006 (13.04.06), Claims; Par. Nos. [0042] to [0047] (Family: none) | 1-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 July, 2006 (24.07.06) | 01 August, 2006 (01.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.
PCT/JP2006/308673

C (Continuation). DOCUMENTS CONSIDERED TO BE RELEVANT

| Category* | Citation of document, with indication, where appropriate, of the relevant passages | Relevant to claim No. |
|---|---|---|
| X | JP 2006-96815 A (The Nippon Synthetic Chemical Industry Co., Ltd.), 13 April, 2006 (13.04.06), Claims; Par. Nos. [0043] to [0048] (Family: none) | 1-17 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 1135852 A
- JP 10067898 A
- JP 7108655 A
- JP 53088067 A
- JP 59020345 A
- JP 52141785 A
- JP 58036412 A
- JP 63125334 A
- JP 63179935 A
- JP 8311276 A
- JP 2000336230 A
- JP 2004282133 A
- JP 2004282139 A
- JP 2005281241 A
- JP 2005281914 A